Europäisches Patentamt

European Patent Office

Office européen des brevets

(19)

(11) Publication number: **0 027 041**
**B1**

(12) **EUROPEAN PATENT SPECIFICATION**

(45) Date of publication of patent specification: **21.09.83**

(21) Application number: **80303492.5**

(22) Date of filing: **03.10.80**

(51) Int. Cl.³: **B 23 P 1/08, H 03 K 3/64**

(54) **Wire-cut electric-discharge machine, a power source for such a machine, and a method of wire-cut electric-discharge machining.**

(30) Priority: **05.10.79 JP 128702/79**

(43) Date of publication of application:
**15.04.81 Bulletin 81/15**

(45) Publication of the grant of the patent:
**21.09.83 Bulletin 83/38**

(84) Designated Contracting States:
**CH DE FR GB LI**

(56) References cited:
**CH - A - 516 971**
**CH - A - 557 215**
**DE - B - 1 939 781**
**GB - A - 1 213 649**
**US - A - 3 504 154**

(73) Proprietor: **Fanuc Ltd**
**5-1, Asahigaoka, 3-chome**
**Hino-shi, Tokyo 191 (JP)**

(72) Inventor: **Haruki, Obara**
**No. 844-7, Hashimoto**
**Sagamihara-shi Kanagawa, 229 (JP)**

(74) Representative: **Bedggood, Guy Stuart et al,**
**Haseltine Lake & Co. Hazlitt House 28**
**Southampton Buildings Chancery Lane**
**London WC2A 1AT (GB)**

Courier Press, Leamington Spa, England

Wire-cut electric-discharge machine, a power source for such a machine, and a method of wire-cut electric-discharge machining

The present invention relates to a wire-cut electric-discharge machine, a power source for such a machine, and a method of wire-cut electric-discharge machining.

A wire-cut electric-discharge machine has various advantages; for example it requires no special operator skills in working a metal mould or the like of a complicated configuration with a high degree of accuracy, and since an electrode used for the electric-discharge machining is a wire, there is no need for the manufacture of a working electrode having a required configuration metal mould, as is needed in ordinary electric-discharge machines. On account of such advantages, wire-cut electric-discharge machines are of very wide application. However a drawback of such machines is that the cutting speed is low. In order to increase cutting speed, various improvements have been made. The present inventor has proposed, as a wire-cut electric-discharge machining power source, a power source of a type in which a voltage is applied from a low-voltage, low-current power source to a machining gap defined between the wire and a workpiece to trigger a discharge and then a pulse current of a large current value and a small pulse width is applied from a high-voltage, high-current power source to the abovesaid gap, thereby to increase the cutting speed.

With this power source as proposed by the present inventor, both the low-voltage and the high-voltage power sources employ the workpiece as anode and the wire as cathode, as is the case with the prior art. Accordingly, in the case of a wire-cut electric-discharge machine of a type employing water as a working liquid and producing a discharge in the water, the workpiece is hot-worked by the discharge and, at the same time, subjected to corrosive effects by electrochemical machining by electrolytic action. The electrolytic action generates hydrogen bubbles in the machining gap and discharge in the bubbles may cause breakage of the wire; furthermore, the verticality of a worked surface is reduced by non-uniform conductivity distribution of the working fluid over the entire area of the workpiece surface and the workpiece readily gets rusty. In a case where the workpiece is made of a hard metal containing cobalt as a binder, the cobalt is corroded by electrochemical machining, presenting a problem of material defects. Accordingly, it is desirable to minimize the corrosive effects of electrolytic action on the workpiece.

It is not preferred, however, to adopt an arrangement in which the workpiece is used as the cathode and the wire as the anode, contrary to the arrangement usually employed, with a view to removing the electrolytic action. The reason is that such reverse-polarity discharge generally makes the discharge unstable to markedly decrease cutting speed and cause great wear of the wire to promote wire breakage.

CH—A—516 971 discloses a method of and apparatus for electric-discharge machining in which low-current power is applied to a machining gap between an electrode and a workpiece to trigger a discharge whereafter high-current power is applied to the machining gap to produce a main discharge for working the workpiece.

DE—A—1 939 781 discloses, in relation to electrochemical processing, that passivation can be counteracted by applying machining current alternately positively and negatively, with lesser electrical energy applied when the electrode is positive and greater electrical energy applied when the electrode is negative.

According to the present invention there is provided a method of wire-cut electric-discharge machining, in which low-current power is applied to a machining gap between a wire and a workpiece to trigger a discharge, whereafter high-current power is applied to the machining gap to produce a main discharge for working the workpiece, characterised in that the low-current power is applied in such a way that the wire is positive relative to the workpiece and the high-current power is applied in such a way that the wire is negative relative to the workpiece, thereby to reduce corrosion by electrolytic action on the workpiece.

According to the present invention, there is also provided a power source, for a wire-cut electric-discharge machine, which has a first low-current discharge circuit for triggering a discharge and a second high-current discharge circuit for producing a main discharge for working after discharge triggering by the first low-current discharge circuit, characterised in that the first low-current discharge circuit is connected so that it makes a wire of the machine positive and a workpiece negative when in use, and the second high-current discharge circuit is connected so that it makes the wire negative and the workpiece positive when in use, thereby to reduce corrosion by electrolytic action on the workpiece.

The present invention provides a power source suitable for use with a wire-cut electric-discharge machine.

The present invention can provide a wire-cut electric-discharge machining power source and a method of machining which is adapted to minimize corrosion by electrolytic action on a workpiece without giving rise to other problems.

The present invention can provide a wire-cut electric-discharge machining power source and a method of machining which is capable of increasing cutting speed.

A wire-cut electric-discharge machining power source embodying this invention is capable of suppressing corrosion by electrolytic action on a workpiece and permitting high-speed machining.

Briefly, a wire-cut electric-discharge machining power source embodying the present invention is provided with a first low-current discharge circuit and a second high-current discharge circuit. The first low-current discharge circuit is connected making the wire positive with respect to a workpiece, and the second high-current discharge circuit is connected making the wire negative relative to the workpiece. After triggering discharge by the first low-current discharge circuit, a main discharge for working is produced by the second high-current discharge circuit. The reverse-polarity discharge caused by the first low-current discharge circuit reduces electrolytic action on the workpiece to lessen the corrosive influence of the electrolytic action and extinguishes ions produced by the main discharge.

Reference is made, by way of example, to the accompanying drawings, in which:—

Figure 1 is a schematic circuit diagram indicating principal parts of a power source embodying the present invention; and

Figure 2 comprises graphical waveform diagrams illustrating gap voltage $V_G$, gap current I and conduction timing of transistors $Q_h$ and $Q_l$ in the embodiment of Figure 1.

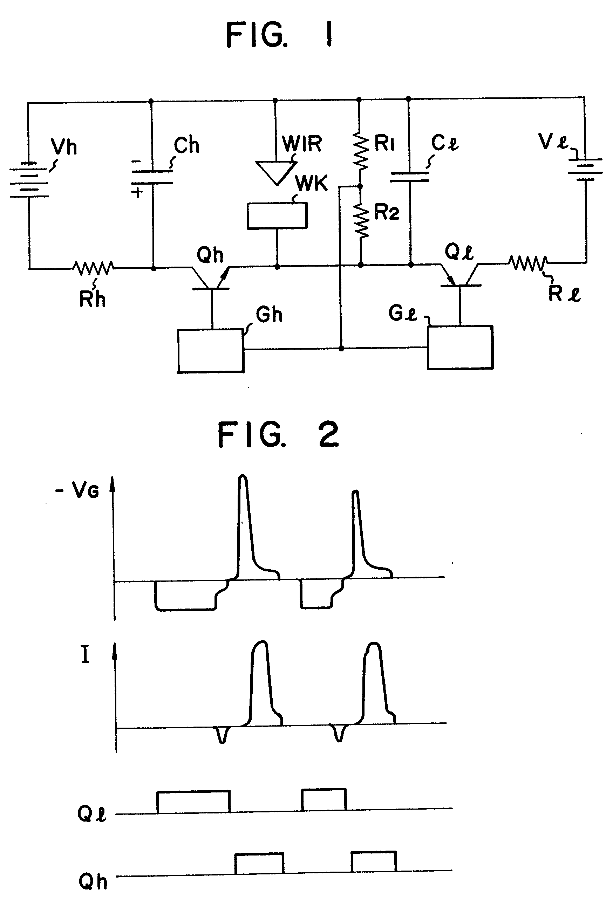

In Figure 1, $V_h$ is a second high-current source; $V_l$ is a first low-current source; $C_h$ is a capacitor of a large capacitance; $C_l$ is a capacitor of a small capacitance; $Q_h$ and $Q_l$ are transistors for current control use; $G_h$ and $G_l$ are control circuit; $R_h$ and $R_l$ are charging resistors; $R_1$ and $R_2$ are voltage-dividing resistors; WIR is a wire; and WK is a workpiece.

The wire-cut electric-discharge machining power source of the present embodiment includes a second high-current discharge circuit comprised of the second high-current source $V_h$, the large-capacitance capacitor $C_h$, the charging resistor $R_h$, the transistor $Q_h$ and the control circuit $G_h$ for controlling the conduction of the transistor $Q_h$, and a first low-current discharge circuit comprised of the first low-current source $V_l$, the small-capacitance capacitor $C_l$, the charging resistor $R_l$, the transistor $Q_l$ and the control circuit $G_l$ for controling the conduction of the transistor $Q_l$. The second high-current discharge circuit is arranged such that the side of the workpiece WK is positive and the side of the wire WIR negative, as is the case with an ordinary machining power source. Conversely, the first low-current discharge circuit is arranged such that the side of the workpiece WK is negative and the side of the wire WIR positive. In general, the lower the first power source voltage is and the higher the second power source voltage is, the more the cutting speed can be increased; accordingly, it is desirable than the first power source voltage is equal to or lower than the second power source voltage, but this relationship may also be reversed according to the thickness of the workpiece and the purpose of working. Since a discharge current of the first low-current discharge circuit is only to trigger a discharge, this discharge current is set to a very small value as compared with a discharge current of the second high-current discharge circuit. Now, a description will be given of the operation of this embodiment.

Upon turning ON the transistor $Q_l$ by the control circuit $G_l$ at the timing shown in waveform $Q_l$ in Figure 2, the small-capacitance capacitor $C_l$, which is charged by the first low-current source $V_l$, provides to the gap between the wire WIR and the workpiece WK a voltage making the former positive and the latter negative, thereby starting a discharge between them. When the discharge has thus been started, the gap voltage $V_G$ drops (rises as seen in the waveform — $V_G$ in Figure 2 in which the positive axis extends downwards), so that it is voltage-divided by the resistors $R_1$ and $R_2$ and then compared as by a comparator with a reference voltage to detect the start of the discharge, and the transistor $Q_l$ is turned OFF by the control circuit $G_l$ and the transistor $Q_h$ of the second high-current discharge circuit is turned ON by the control circuit $Q_h$ (see waveform $Q_h$ in Figure 2).

As a consequence, charges stored in the capacitor $C_h$ with the polarity indicated by +, — in Figure 1 are applied via the transistor $Q_h$ to the gap between the workpiece WK and the wire WIR with the former made positive and the latter negative, starting a main discharge to cut the workpiece WK. In this case, by detecting the gap voltage $V_G$ in the same manner as described above, the end of main discharge is detected and the transistor $Q_h$ is turned OFF by the control circuit $G_h$. Then, after the elapse of a certain period of time, the transistor $Q_l$ is turned ON again and the abovesaid discharge is repeated. In the present invention, the reason for which the discharge is produced using the charges stored in the capacitor $C_h$ of large capacitance is that the discharge current has a large peak value of 100 to 200 A (see waveform I in Figure 2) and a small pulse width of 1 to 2 $\mu s$. By using such a capacitor $C_h$ and turning OFF the transistor $Q_h$ at the end of discharge, it is possible to reduce a surge which is applied to the transistor $Q_h$ when it is turned OFF. The illustrated embodiment employs the capacitor $C_l$ in the first low-current discharge circuit, but its capacitance value is very small as compared with that of the capacitor $C_h$ and the capacitor $C_l$ can be omitted in some cases. The transistor $Q_l$ is shown to be a PNP transistor; this is intended to make the ground potentials of the control circuits $G_l$ and $G_h$ equal to each other. If the control circuits $G_l$ and $G_h$ can be grounded separately by a photo coupler of high-speed operation, and NPN transistor can also be used as the transistor $Q_l$.

As has been described in the foregoing, according to one aspect of the present invention, in a wire-cut electric-discharge machining power source of the type triggering a discharge by a first low-current discharge circuit and then producing a main discharge by a second high-current discharge circuit for working, the first low-current discharge circuit is connected making the wire positive and the workpiece negative. The electrolytic action on the workpiece is reduced to lessen the corrosive influence of the electrolytic action and the application of a reverse voltage after the main discharge heightens an ion eliminating effect, so that the frequency of discharge can be increased, thus permitting high-speed machining. Since the discharge current by the first low-current source is very weak, the reverse-polarity discharge scarcely produces ill effects such as wearing of the wire and so forth.

Thus, a wire-cut electric-discharge machining power source embodying this invention is provided with a first low-current discharge circuit and a second high-current discharge circuit. The first low-current discharge circuit is connected making a wire electrode positive and a workpiece negative, and the second high-current discharge circuit is connected making the wire electrode negative and the workpiece positive. After triggering a discharge by the first low-current discharge circuit, a main discharge for machining is produced by the second high-current discharge circuit.

**Claims**

1. A method of wire-cut electric-discharge machining, in which low-current power is applied to a machining gap between a wire and a workpiece to trigger a discharge, whereafter high-current power is applied to the machining gap to produce a main discharge for working the workpiece, characterised in that the low-current power is applied in such a way that the wire is positive relative to the workpiece and the high-current power is applied in such a way that the wire is negative relative to the workpiece, thereby to reduce corrosion by electrolytic action on the workpiece.

2. A method as claimed in claim 1, wherein the low-current power is applied at a voltage lower than that of the high-current power.

3. A power source, for a wire-cut electric-discharge machine, which has first low-current discharge circuit for triggering a discharge and a second high-current discharge circuit for producing a main discharge for working after discharge triggering by the first low-current discharge circuit, characterized in that the first low-circuit discharge circuit is connected so that it makes a wire of the machine positive and a workpiece negative when in use, and the second high-current discharge circuit is connected so that it makes the wire negative and the workpiece positive when in use, thereby to reduce corrosion by electrolytic action on the workpiece.

4. A power source as claimed in claim 3, wherein the first low-current discharge circuit comprises a small capacitance capacitor connected in parallel with a machining gap defined between the wire and the workpiece, a first low-current source for charging the small-capacitance capacitor, a first transistor inserted in a discharge path of the small-capacitance capacitor, and a first control circuit for controlling the conduction of the first transistor to trigger a discharge.

5. A power source as claimed in claim 3, wherein the first low-current discharge circuit comprises a first low-current source, a first transistor for applying the output from the first low-current source in parallel with a machining gap defined between the wire and the workpiece, and a first control circuit for controlling the conduction of the first transistor.

6. A power source as claimed in claim 3, 4 or 5, wherein the second high-current discharge circuit comprises a large-capacitance capacitor connected in parallel with a machining gap defined between the wire and the workpiece, a second high-current source for charging the large-capacitance capacitor, a second transistor in a discharge path of the large-capacitance capacitor, and a second control circuit for controlling conduction of the second transistor to produce the main discharge.

7. A wire-cut electric-discharge machine having a power source as claimed in any one of claims 3 to 6.

**Revendications**

1. Un procédé d'usinage par électro-érosion par fil coupant, dans lequel de l'énergie à courant faible est appliquée à un intervalle d'usinage entre un fil et une pièce usinée pour déclencher une décharge, après quoi de l'énergie à courant élevé est appliquée à l'intervalle d'usinage pour produire une décharge principale pour usiner la pièce, caractérisé en ce que l'énergie à courant faible est appliquée d'une manière telle que le fil soit positif par rapport à la pièce usinée et l'énergie à courant élevé est appliquée d'une manière telle que le fil soit négatif par rapport à la pièce usinée, pour réduire ainsi la corrosion par action électrolytique sur la pièce usinée.

2. Un procédé selon la revendication 1, dans lequel l'énergie à courant faible est appliquée à une tension inférieure à celle de l'énergie à courant élevé.

3. Une source d'énergie, pour une machine d'électro-érosion à fil coupant, qui comporte un premier circuit de décharge à courant faible pour déclencher une décharge et un second circuit de décharge à courant élevé pour produire une décharge principale pour l'usinage, après déclenchement de la décharge par le premier circuit de décharge à courant faible, caractérisée en ce que le premier circuit de décharge à courant faible est connecté de façon à rendre positif un fil de la machine et à rendre négative une pièce usinée, pendant l'utilisation, et le second circuit de décharge à courant élevé est connecté de façon à rendre le fil négatif et la pièce usinée positive, pendant l'utilisation, pour réduire ainsi la corrosion par action électrolytique sur la pièce usinée.

4. Une source d'énergie selon la revendication 3, dans laquelle le premier circuit de décharge à courant faible comprend un condensateur de faible capacité qui est branché en parallèle sur un intervalle d'usinage défini entre le fil et la pièce usinée, une première source à courant faible pour charger le condensateur de faible capacité, un premier transistor intercalé dans un circuit de décharge du condensateur de faible capacite, et un premier circuit de commande destiné à commander la conduction du premier transistor pour déclencher une décharge.

5. Une source d'énergie selon la revendication 3, dans laquelle le premier circuit de décharge à courant faible comprend une première source à courant faible, un premier transistor destiné à appliquer le signal de sortie de la première source à courant faible en parallèle sur un intervalle d'usinage qui est défini entre le fil et la pièce usinée, et un premier circuit de commande qui est destiné à commander la conduction du premier transistor.

6. Une source d'énergie selon la revendication 3, 4 ou 5, dans laquelle le second circuit de décharge à courant élevé comprend un condensateur de capacité élevée qui est branché en parallèle sur un intervalle d'usinage défini entre le fil et la pièce usinée, une seconde source à courant élevé destinée à charger le condensateur de capacité élevée, un second transistor dans un circuit de décharge du condensateur de capacité élevée, et un second circuit de commande destiné à commander la conduction du second transistor pour produire la décharge principale.

7. Une machine d'électro-érosion à fil coupant comportant une source d'énergie selon l'une quelconque des revendications 3 à 6.

**Patentansprüche**

1. Verfahren zur Bearbeitung eines Werkstücks durch die elektrische Entladung eines Schneidedrahts, wobei dem Bearbeitungszwischenraum zwischen dem Draht und dem Werkstück eine niedrige Stromstärke zugeführt wird, um die Entladung einzuleiten und anschließend dem Zwischenraum eine groß Stromstärke zugeleitet wird, um für die Bearbeitung des Werkstücks eine Hauptentladung zu erzeugen, dadurch gekennzeichnet, daß die niedrige Stromstärke in der Weise zugeführt wird, daß der Draht positiv gegenüber dem Werkstück und die große Stromstärke in der Weise zugeführt wird, daß der Draht gegenüber dem Werkstück negativ gepolt ist, um die Korrosion durch elektrolytische Einwirkung auf das Werkstück zu verringern.

2. Verfahren nach Anspruch 1 dadurch gekennzeichnet, daß die Spannung mit der die geringe Stromstärke zugeführt wird, niedriger ist als die Spannung der großen Stromstärke.

3. Stromquelle für eine Werkzeugmaschine mit elektrischer Entladung eines Schneidedrahts, die einen ersten Entladungsschaltkreis mit geringer Stromstärke, um die eine Entladung einzuleiten und einen zweiten Entladungsschaltkreis mit großer Stromstärke, um eine Hauptentladung zu erzeugen, aufweist, um die Bearbeitung durchzuführen, nachdem die Entladung durch den ersten Schaltstromkreis mit geringer Stromstärke eingeleitet wurde, dadurch gekennzeichnet, daß der erste Entladungsstromschaltkreis für niedrige Stromstärke so geschaltet ist, daß er den Schneidedraht bei Einschaltung der Maschine positiv und das Werkstück negativ polt, und der zweite Entladungsstromschaltkreis für große Stromstärke bei Einschaltung den Schneidedraht negativ und das Werkstück positiv polt, wodurch die Korrosion infolge elektrolytischer Einwirkung auf das Werkstück verringert wird.

4. Stromquelle nach Anspruch 3 dadurch gekennzeichnet, daß der erste Entladungsstromschaltkreis einen kleinen Kondensator niedriger Kapazität, der parallel zu dem Bearbeitungszwischenraum zwischen dem Schneidedraht und dem Werkstück geschaltet ist, eine erste niedrigstromige Ladequelle, um den Kondensator aufzuladen, einen ersten Transistor, der in einem Entladeweg des Kondensators niedriger Kapazität eingeschaltet ist und einen ersten Kontrollschaltkreis aufweist, um die Lei tungsfähigkeit des ersten Transistors für die Einleitung der Entladung zu kontrollieren.

5. Stromquelle nach Anspruch 3 dadurch gekennzeichnet, daß der erste niedrigstromige Schaltkreis eine erste niedrigstromige Stromquelle, einen ersten Transistor, um die Leistung der ersten niedrigstromigen Stromquelle parallel zum Bearbeitungszwischenraum zwischen dem Schneidedraht und dem Werkstück zu verwenden und einen ersten Kontrollschaltkreis aufweist, um die Leitungsfähigkeit des ersten Transistors zu überwachen.

6. Stromquelle nach Anspruch 3, 4 oder 5 dadurch gekennzeichnet, daß der zweite hochstromige Entladungsstromschaltkreis einen Kondensator großer Kapazität, der parallel zum Bearbeitungszwischenraum, zwischen dem Schneidedraht und dem Werkstück angeordnet ist, eine zweite hochstromige Stromquelle für die Aufladung des Kondensators großer Kapazität, einen zweiten Transistor im Entladeweg des Kondensators großer Kapazität und einen zweiten Kontrollschaltkreis, um die Leitungsfähigkeit des zweiten Transistors bei der Erzeugung der Hauptenladung zu überwachen, aufweist.

7. Schneidedraht-Bearbeitungsmaschine mit elektrischer Entladung mit einer Stromquelle nach den Ansprüchen 3—6.

# FIG. 1

# FIG. 2